# EUROPÄISCHE PATENTSCHRIFT

(11) **EP 2 329 975 B1**
(45) Veröffentlichungstag und Bekanntmachung des Hinweises auf die Patenterteilung: **22.05.2019**
(21) Anmeldenummer: 10013981.5
(22) Anmeldetag: 26.10.2010
(51) Int. Cl.: B60J 5/06

(54) **Schiebetüre für ein Fahrzeug**
Sliding door for a vehicle
Porte coulissante pour véhicule

(30) Priorität: 07.12.2009 DE 102009057300
(43) Veröffentlichungstag der Anmeldung: 08.06.2011
(73) Patentinhaber: DURA Automotive Holdings U.K., Ltd., Birmingham, B35 7AG (GB)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- EP-A2- 1 209 311
- EP-A2- 2 127 928
- US-A- 3 887 227
- US-A1- 2009 051 194
- US-B1- 6 206 455

## Beschreibung

Die Erfindung betrifft eine Schiebetüre für ein Fahrzeug, insbesondere für ein Kraftfahrzeug.

Die Schiebetüre umfaßt eine Führungsschiene, einen Gleitschlitten und eine Zentrierung. Der Gleitschlittten ist an der Führungsschiene längsverschieblich gelagert und durch ein Mehrgelenk mit der Fahrzeugkarosserie verbunden. Die Zentrierung ist an dem dem Mehrgelenk abgewandten Ende der Schiebetüre vorgesehen.

Eine derartige Schiebetüre ist aus der DE 10 2008 016 650 B3, auf die hiermit ausdrücklich Bezug genommen wird, bekannt. Bei dieser Schiebetüre umfaßt das Mehrgelenk einen Scharnierbügel, der an dem Gleitschlitten und an einem Karosserieflansch drehbar gelagert ist, und einen Steuerhebel, der an dem Gleitschlitten und an einem oder dem Karosserieflansch drehbar gelagert ist. Die vorbekannte Schiebetüre umfaßt ferner einen ersten Zwischenhebel, der an dem Steuerhebel drehbar gelagert ist, und einen zweiten Zwischenhebel, der an dem ersten Zwischenhebel und an dem Gleitschlitten drehbar gelagert ist. Die Schiebetüre ist an dem dem Mehrgelenk abgewandten Ende durch eine Zentrierung drehbar und längsverschieblich gelagert. Sie ist dort arretierbar. Der Steuerhebel weist eine Verlängerung auf, an dem der erste Zwischenhebel drehbar gelagert ist. An dem Verbindungsgelenk des ersten Zwischenhebels und des zweiten Zwischenhebels ist ein Führungsstift vorgesehen, der in einer an der Schiebetüre vorgesehenen Führungsbahn geführt ist. Die Führungsbahn verläuft relativ zur Führungsschiene geneigt. Hierbei verläuft die Führungsbahn in Richtung von dem Scharnierbügel weg nach außen geneigt.

Eine andere Schiebetüre der eingangs angegebenen Art ist in der EP 2 008 846 A2 beschrieben, auf die ebenfalls ausdrücklich Bezug genommen wird. Hier ist eine Antriebstange vorhanden, die an dem Steuerhebel drehbar gelagert ist. Die Schiebetüre ist an dem dem Mehrgelenk abgewandten Ende durch eine Zentrierung drehbar und längsverschieblich gelagert. Sie ist dort arretierbar. Die Antriebstange ist an der Führungsschiene drehbar gelagert. Der Steuerhebel weist einen Hebelarm auf, an dem die Antriebstange drehbar gelagert ist. An einem Zwischenhebel, der an dem Gleitschlitten drehbar gelagert ist, ist ein Führungsstift vorgesehen, der in einer an der Schiebetüre vorgesehenen Führungsbahn geführt ist.

Aus der prioritätsälteren, nicht vorveröffentlichten DE 10 2008 026 137 B4, die ebenfalls ausdrücklich in Bezug genommen wird, ist eine weitere Schiebetüre der eingangs angegebenen Art bekannt. Hier weist der Steuerhebel einen Hebelarm auf, an dem ein Führungsstift vorgesehen ist, der in einer an der Schiebetüre vorgesehenen Führungsbahn geführt ist. Die Führungsbahn verläuft vorzugsweise in Richtung von dem Scharnierbügel weg nach außen geneigt.

Bei den vorbekannten Schiebetüren wird die Zentrierung an dem dem Mehrgelenk abgewandten Ende der Schiebetüre von einer U-förmigen Aufnahme gebildet, die an der Schiebetüre vorgesehen ist und die geneigt zur Fahrzeug-Längsrichtung verläuft, und von einem Scharnierbolzen, der an einem Karosserieflansch vorgesehen ist und der in die U-förmige Aufnahme eingreift, wo er arretiert werden kann.

Eine Schiebetüre nach dem Oberbegriff des Anspruchs 1 ist aus der US 2009/ 051194 A1 bekannt.

Aufgabe der Erfindung ist es, eine verbesserte Schiebetüre der eingangs angegebenen Art vorzuschlagen.

Erfindungsgemäß wird diese Aufgabe durch die Merkmale des Anspruchs 1 gelöst. Die Zentrierung weist eine Zentrierfläche auf, die bei geschlossener Schiebetüre an einer karosseriefesten Gegenfläche anliegt. Hierdurch wird eine zuverlässige Zentrierung der Schiebetüre in der geschlossenen Stellung ermöglicht. Die Zentrierfläche weist einen ebenen Abschnitt auf, der geneigt zur Fahrzeug-Längsrichtung verläuft. Die karosseriefeste Gegenfläche ist entsprechend ausgebildet. Sie umfaßt einen ebenen, geneigten Abschnitt, an dem der geneigte Abschnitt der Zentrierfläche im geschlossenen Zustand der Schiebetüre anliegt. Der geneigt zur Fahrzeug-Längsrichtung verlaufende Abschnitt der Zentrierfläche ist vorzugsweise in Fahrzeugrichtung nach vorne und innen geneigt.

Erfindungsgemäß weist die Zentrierfläche einen Abschnitt auf, der parallel zur Fahrzeug-Längsrichtung verläuft. Die karosseriefeste Gegenfläche ist entsprechend ausgebildet. Der parallel zur Fahrzeug-Längsrichtung verlaufende Abschnitt liegt vorzugsweise im Anschluß an einen Abschnitt, der geneigt zur Fahrzeug-Längsrichtung verläuft. Er bildet vorzugsweise einen Endabschnitt der Zentrierfläche.

Vorteilhafte Weiterbildungen sind in den Unteransprüchen beschrieben.

Vorteilhaft ist es, wenn die Zentrierung einen Fanghaken aufweist. An der Fahrzeugkarosserie ist vorzugsweise ein entsprechendes Gegenlager für den Fanghaken vorhanden. Durch den Fanghaken können im Fall eines Seitenaufpralls auf die Schiebetüre eine übermäßige Verformung der Schiebetüre und entsprechende nachteilige Folgen für die Insassen vermieden werden.

Der Fanghaken bildet einen Crashhaken für einen Seitenaufprall an der Schiebetüre. Dem Fanghaken liegt vorzugsweise ein karosseriefestes Gegenlager gegenüber.

Die karosserieseitige Gegenfläche kann an einer Abdeckung vorgesehen sein. Die Abdeckung kann an einem Karosserieflansch befestigbar oder befestigt sein.

Die Erfindung betrifft ferner ein Fahrzeug, insbesondere ein Kraftfahrzeug, das durch eine oder mehrere erfindungsgemäße Schiebetüren gekennzeichnet ist.

Ein Ausführungsbeispiel der Erfindung wird nachstehend anhand der beigefügten Zeichnung im einzelnen erläutert. In der Zeichnung zeigt
- Fig. 1: eine vorbekannte Schiebetüre für ein Kraftfahrzeug in der geschlossenen Stellung in einer schematischen Ansicht von oben,
- Fig. 2: die Schiebetüre gemäß Fig. 1 in einer teilweise geöffneten Stellung in einer der Fig. 1 entsprechenden schematischen Ansicht von oben,
- Fig. 3: die Schiebetüre gemäß Fig. 1 und 2 in der vollständig geöffneten Stellung in einer den Fig. 1 und 2 entsprechenden schematischen Ansicht von oben,
- Fig. 7: die Rohbau-Schiebetüre gemäß Fig. 6 in der geöffneten Stellung, und
- Fig. 8: einen Karosserieflansch in einer perspektivischen Ansicht.

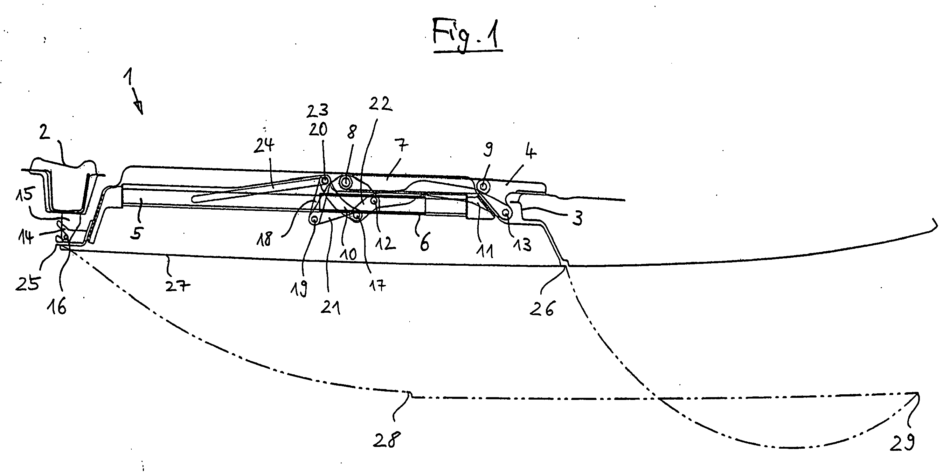

Fig. 1, 2 und 3 zeigen die Schiebetüre 1 nach einem Ausführungsbeispiel der DE 10 2008 016 650 B3. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist. Bei dem hinteren Karosserieteil 3 kann es sich um die C-Säule oder um die A-Säule handeln.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Steuerhebel 11 ist ein erster Zwischenhebel 10 drehbar gelagert, und zwar um die Achse eines Gelenks 17. An dem Gleitschlitten 6 ist ein zweiter Zwischenhebel 18 drehbar gelagert, und zwar um die Achse eines Gelenks 19. Das Gelenk 19 liegt im äußeren Bereich des Gleitschlittens 6. Es liegt im Bereich des vorderen Endes des Gleitschlittens 6. Die von den Gelenken 17, 19 abgewandten Enden der Zwischenhebel 10, 18 sind durch ein Gelenk 20 drehbar miteinander verbunden. Der erste Zwischenhebel 10 und der zweite Zwischenhebel 18 bilden einen Kniehebel. Da das Verbindungsgelenk 20 der Zwischenhebel 10, 18 in Bezug auf das Kraftfahrzeug weiter innen liegt als die Gelenke 17, 19, weist der von den Zwischenhebeln 10, 18 gebildete Kniehebel in Bezug auf das Kraftfahrzeug nach innen.

An dem Gleitschlitten 6 ist eine Gelenkplatte 21 befestigt, die die Gelenke 8, 12 und 19 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1 gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist eine Verlängerung 22 auf, die sich von dem Gelenk 12 nach außen erstreckt. Die Verlängerung 22 verlängert den Steuerhebel 11 längs der Verbindungslinie von dem Gelenk 13 zu dem Gelenk 12 über das Gelenk 12 hinaus. Dabei knickt die Verlängerung 22 gegenüber der Verbindungslinie zwischen den Gelenken 13 und 12, also der Längserstreckung des Steuerhebels 11, geringfügig nach außen bzw. hinten ab. An dem Steuerhebel 11 ist im Bereich des äußeren Endes der Verlängerung 22 das Gelenk 17 für den ersten Zwischenhebel 10 vorgesehen.

An dem Verbindungsgelenk 20 des ersten Zwischenhebels 10 und des zweiten Zwischenhebels 18 ist ein Führungsstift 23 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1 gezeigt ist, liegt der Scharnierbolzen 16 in der U-förmigen Aufnahme 14, und zwar im Bereich von deren Ende. Der Führungsstift 23 befindet sich im Bereich des hinteren, inneren Endes der Führungsbahn 24. Der erste Zwischenhebel 10 weist von dem Gelenk 17 nach vorne und innen. Der zweite Zwischenhebel 18 weist von dem Gelenk 19 nach hinten und innen.

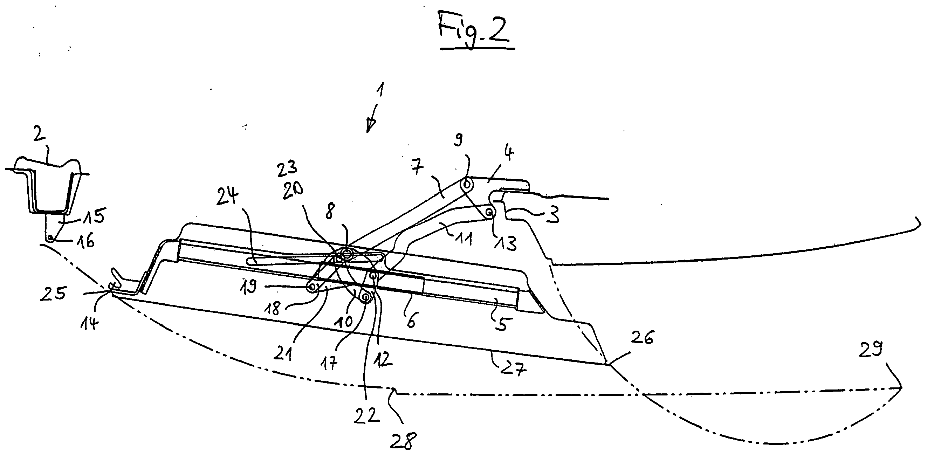

Im Verlauf der Öffnungsbewegung wird die Stellung nach Fig. 2 durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

Ohne den Führungsstift 23 könnte der Gleitschlitten 6 auf der Führungsschiene 5 frei verschoben werden. Der in der Führungsbahn 24 geführte Führungsstift 23 verhindert diese freie Verschiebbarkeit und legt die relative Position des Gleitschlittens 6 gegenüber der Führungsschiene 5 und damit gegenüber der Schiebetüre 1 fest.

Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 23 relativ zur Führungsschiene 5 und zum Gleitschlitten 6 nach außen, wodurch der zweite Zwischenhebel 18 im Uhrzeigersinn um das Gelenk 19 verschwenkt wird. Durch die Bewegung des Führungsstifts 23 relativ zum Gleitschlitten 6 nach hinten und außen wird das am anderen Ende des ersten Zwischenhebels 10 befindliche Gelenk 17 ebenfalls nach hinten bewegt, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 und/oder des ersten Zwischenhebels 10 und/oder des zweiten Zwischenhebels 18 um eines oder mehrere der Gelenke 9, 8, 13, 12, 17, 20, 19.

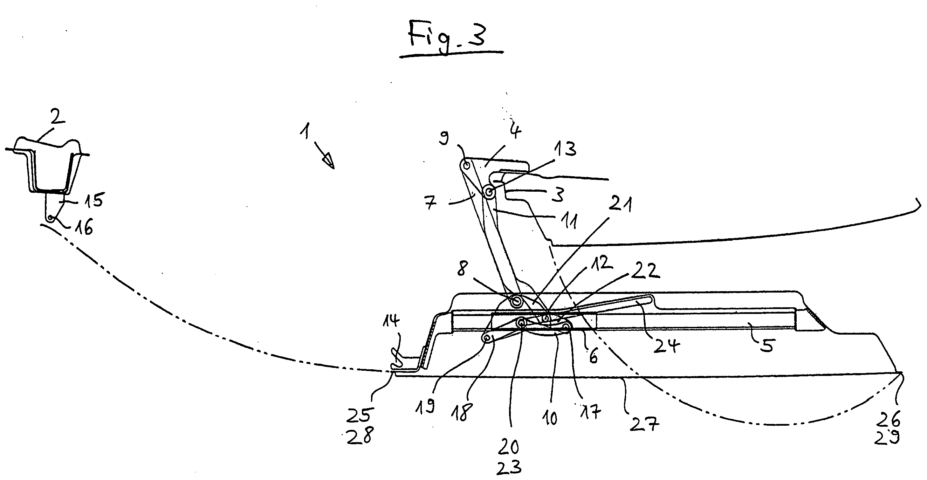

Die vollständig geöffnete Stellung der Schiebetüre 1 ist in Fig. 3 dargestellt. Der erste Zwischenhebel 10 wurde gegenüber der Verlängerung 22 um das Gelenk 17 um etwa 90° im Uhrzeigersinn verschwenkt. Der Führungsstift 23 hat das vordere, geschlossene Ende der Führungsbahn 24 erreicht. Der zweite Zwischenhebel 18 wurde gegenüber dem Gleitschlitten 6 bzw. der Gelenkplatte 21 um das Gelenk 19 um etwa 45° im Uhrzeigersinn verschwenkt. Der Öffnungswinkel der Zwischenhebel 10, 18 an dem Gelenk 20 wurde von etwa 30° auf etwa 150° vergrößert. Der Steuerhebel 11 und der Scharnierbügel 7 wurden um einen Winkel von 120° entgegen dem Uhrzeigersinn um die Gelenke 13 und 9 verschwenkt.

Wenn die Schiebetüre 1 geschlossen werden soll, werden die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 23 übertragen und von dort über den ersten Zwischenhebel 10 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1, 2 und 3 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

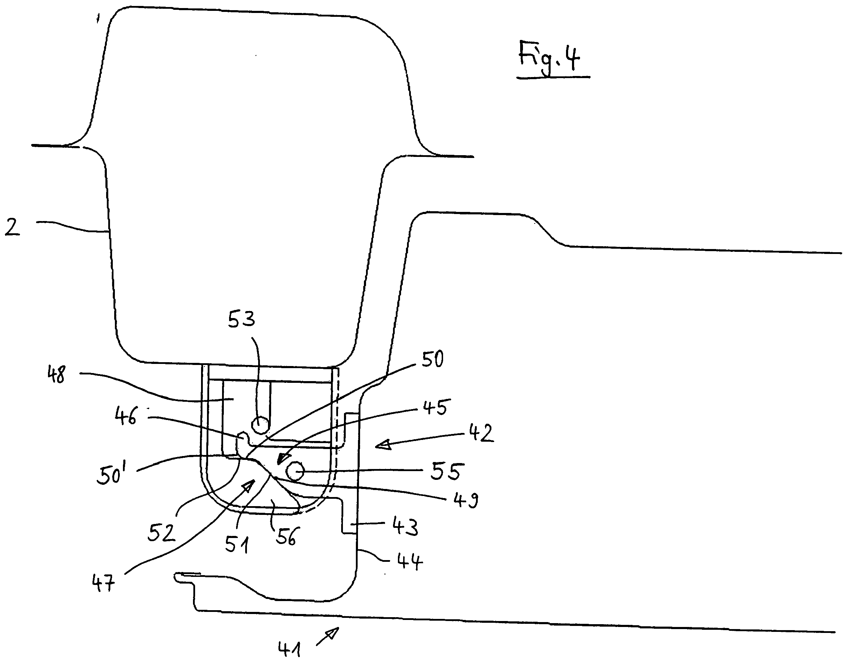

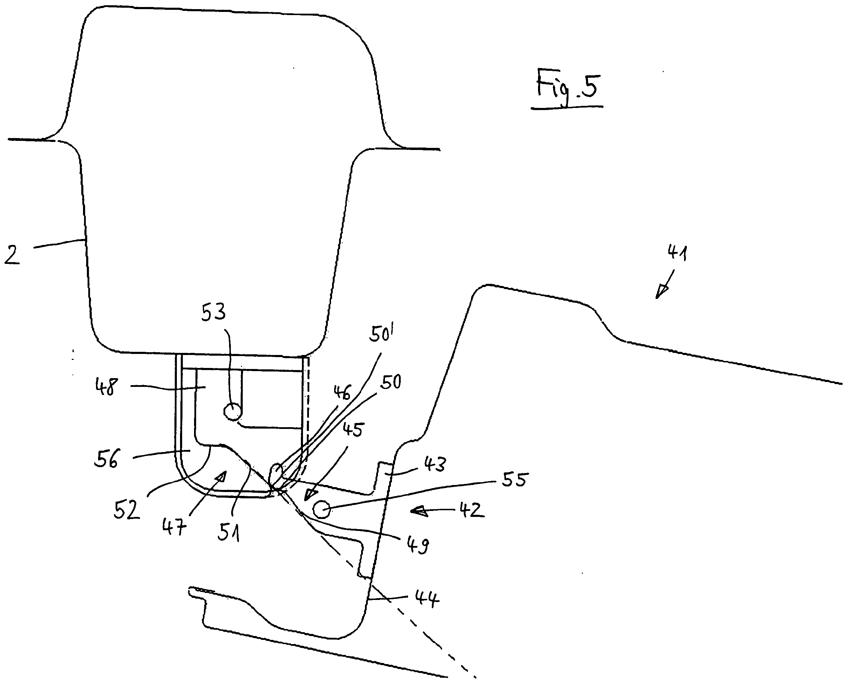

Fig. 4 und 5 zeigen den vorderen Teil einer erfindungsgemäßen Schiebetüre 41 mit einer Zentrierung 42, die anders als bei der Ausführungsform nach Fig. 1 bis 3 ausgebildet ist. Die Zentrierung 42 ist am hinteren Ende der Schiebetüre 41 befestigt. Sie umfaßt einen Befestigungsflansch 43, der an einem vorderen Abschlußblech 44 der Schiebetüre 41 befestigt ist, eine Zentrierfläche 45 und einen Fanghaken 46.

Die Zentrierfläche 45 liegt bei geschlossener Schiebetüre an einer karosseriefesten Gegenfläche 47 an. Die karosseriefeste Gegenfläche 47 ist an einer karosserieseitigen Abdeckung 56 vorgesehen, die einen Karosserieflansch 48 abdeckt, der an der B-Säule 2 befestigt ist.

Die Zentrierfläche 45 weist einen Abschnitt 49 auf, der geneigt zur Fahrzeug-Längsrichtung verläuft. Der Abschnitt 49 ist in Fahrzeugrichtung nach vorne und innen geneigt. Er ist eben.

Die Zentrierfläche 45 weist ferner einen Abschnitt 50 auf, der parallel zur Fahrzeug-Längsrichtung verläuft. Der parallele Abschnitt 50 schließt sich an den geneigten Abschnitt 49 an. Er bildet den Endabschnitt der Zentrierfläche 45. Der parallele Abschnitt 50 liegt in Fahrzeug-Längsrichtung vor dem geneigten Abschnitt 49. Er weist an seinem in Fahrzeug-Längsrichtung vorderen Ende eine Abrundung 50' auf.

Die karosseriefeste Gegenfläche 47 ist in entsprechender Weise ausgebildet. Sie umfaßt einen ebenen, geneigten Abschnitt 51 und einen daran anschließenden parallelen Abschnitt 52. Im geschlossenen Zustand der Schiebetüre liegt der geneigte Abschnitt 49 an dem geneigten Abschnitt 51 an, und der parallele Abschnitt 50 liegt an dem parallelen Abschnitt 52 an. Auf diese Weise wird eine zuverlässige Zentrierung der Schiebetüre 41 in der geschlossenen Stellung der Schiebetüre ermöglicht.

Der Fanghaken 46 befindet sich am vorderen Ende der Zentrierung 42. Er liegt dem parallelen Abschnitt 50 der Zentrierfläche 45 gegenüber. Der Fanghaken 46 ist in Fahrzeug-Längsrichtung nach innen gerichtet. Ihm liegt ein karosseriefestes Gegenlager 53 gegenüber. Das Gegenlager 53 ist an der Abdeckung 56 vorgesehen oder befestigt. Es liegt in Fahrzeug-Längsrichtung hinter dem und innerhalb des Fanghakens 46. Wenn bei einem Seitenaufprall die Schiebetüre 41 nach innen verformt wird, gelangt der hintere Bereich des Fanghakens 46 mit dem karosseriefesten Gegenlager 53 in Anlage, wodurch eine Verankerung für die Schiebetüre 41 gebildet wird, die einer Verformung der Schiebetüre 41 nach innen einen Widerstand entgegensetzt.

Wenn die Schiebetüre 41 geöffnet wird, wird die Zentrierung 42 aus der in Fig. 4 gezeigten Stellung nach hinten und außen bewegt. Aufgrund des parallelen Abschnitts 50 der Zentrierfläche 45 der Zentrierung 42 und des zugehörigen parallelen Abschnitts 52 der karosseriefesten Gegenfläche 47 des Karosserieflansches 48 bewegt sich die Zentrierung 42 zunächst ausschließlich nach hinten. Danach, wenn die Länge des parallelen Abschnitts 50 überwunden ist, wird durch die geneigten Abschnitte 49, 51 eine Bewegung nach außen überlagert. Die Zentrierung 42 bewegt sich dann gleichmäßig nach hinten und außen. Während dieser Bewegung gleitet die Abrundung 50' am vorderen Ende des parallelen Abschnitts 50 der Zentrierfläche 45 auf dem geneigten Abschnitt 51 der karosseriefesten Gegenfläche 47 nach hinten und außen. Das Ende dieser Gleitbewegung ist in Fig. 5 dargestellt, in der sich die Abrundung 50' am vorderen Ende des parallelen Abschnitts 50 am hinteren, äußeren Ende des geneigten Abschnitts 51 befindet. Danach hebt die Zentrierung 42 von der karosseriefesten Gegenfläche 47 ab.

Beim Schließen der Schiebetüre 41 wird der umgekehrte Weg durchlaufen. Die Abrundung 50' am vorderen Ende des parallelen Abschnitts 50 gelangt mit dem äußeren, hinteren Ende des geneigten Abschnitts 51 in Anlage und gleitet anschließend den geneigten Abschnitt 51 nach vorne und innen entlang. Wenn die Abrundung 50' am vorderen Ende des parallelen Abschnitts 50 das vordere innere Ende des geneigten Abschnitts 51 erreicht hat, schließt sich eine ausschließliche Bewegung nach vorne an, die beendet ist, wenn der geneigte Abschnitt 49 vollständig an dem geneigten Abschnitt 51 anliegt, wie in Fig. 4 gezeigt. In dieser Stellung ist die Schiebetüre 41 vollständig und zuverlässig verrastet.

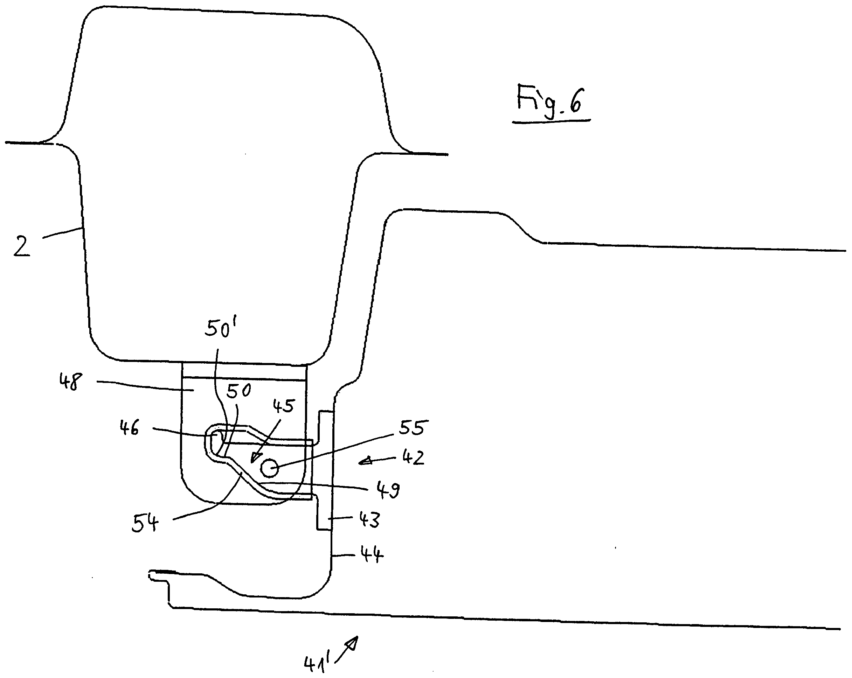

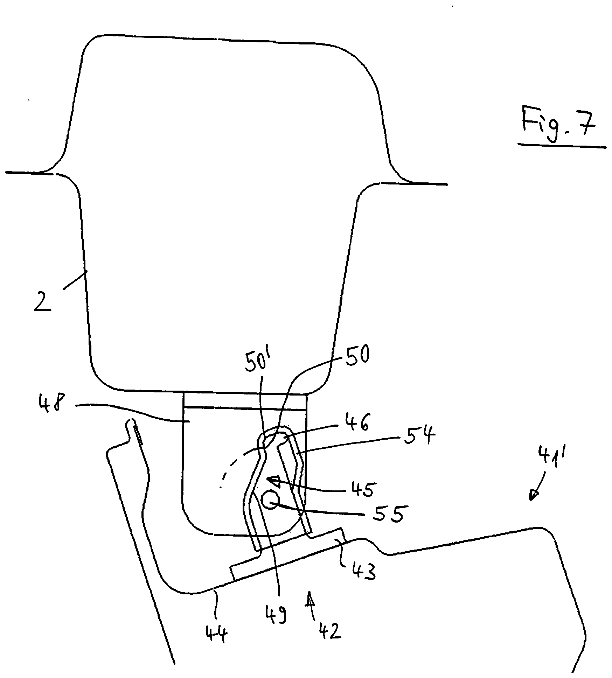

Fig. 6 und 7 zeigen den vorderen Teil einer Rohbau-Schiebetüre 41', aus der die Schiebetüre 41 gemäß Fig. 4 und 5 herstellbar ist. Hier ist die Zentrierung 42 durch eine türseitige Abdeckkappe 54 abgedeckt. Die Abdeckkappe 54 kann aus Kunststoff hergestellt sein. Sie ist auf die Zentrierung 42 aufgesteckt. Vorzugsweise sind die Innenmaße der Zentrierung 42 geringfügig kleiner als die zugehörigen Außenmaße der Zentrierung 42, so daß die Abdeckkappe 54 reibschlüssig auf der Zentrierung 42 festgehalten wird. Durch die Abdeckkappe 54 wird die Zentrierung 42 einschließlich ihrer Zentrierfläche 45 während des Lackiervorgangs abgedeckt und geschützt.

An der Zentrierung 42, an der Abdeckkappe 54 und an dem Karosserieflansch 48 ist eine Drehscharnierachse 55 anbringbar. Zu diesem Zweck weisen die Zentrierung 42, die Abdeckkappe 54 und der Karosserieflansch 48 Aufnahmen auf, in die die Drehscharnierachse 55 einsteckbar ist.

Vor dem Lackiervorgang wird die Rohbauschiebetüre 41' an der B-Säule 2 derart positioniert, daß die Aufnahmen der Zentrierung 42, der Abdeckkappe 54 und des Karosserieflansches 48 miteinander fluchten. In dieser Position wird die Drehscharnierachse 55 in die Aufnahmen eingesteckt, so daß die Rohbau-Schiebetür um die Drehscharnierachse 55 schwenkbar ist.

Durch eine Verschwenkung um die Drehscharnierachse 55 kann die Rohbau-Schiebetüre 41' gegenüber der Rohbaukarosserie verschwenkt werden. Fig. 6 zeigt die geschlossene Stellung der Rohbau-Schiebetüre 41'. In dieser geschlossenen Stellung füllt die Rohbau-Schiebetüre 41' die zugehörige Öffnung in der Rohbaukarosserie aus. Die Rohbau-Schiebetüre 41' ist in dieser Stellung fixiert. Die Fixierung kann durch lösbare Klammern und/oder auf andere Weise erfolgen. In dieser geschlossenen Stellung gemäß Fig. 6 können die Tauchbäder durchlaufen werden.

In der geöffneten Stellung gemäß Fig. 7 können die Schritte der Naßlackierung durchgeführt werden. Es ist möglich, während dieser Verfahrensschritte die Rohbau-Schiebetüre 41' mehr oder weniger zu öffnen oder zu schließen, was je nach Erfordernis auch mehrmals erfolgen kann und was durch Industrieroboter durchgeführt werden kann.

Nach der Durchführung des Lackiervorgangs kann die Rohbau-Schiebetüre 41' komplettiert werden. Es können also Führungsschiene, Gleitschlitten, Mehrgelenk, Scheibe, Fensterheber, Innenverkleidung und weitere Teile an der Rohbau-Schiebetüre 41' montiert werden. Anschließend wird das Mehrgelenk der komplettierten Schiebetüre mit der Karosserie verbunden. Die komplettierte Schiebetüre ist dann sowohl durch die Drehscharnierachse 55 als auch das Mehrgelenk mit der Karosserie verbunden. Durch die Komplettierung der Rohbau-Schiebetüre 41' zu einer Schiebetüre 41 steigt deren Gewicht. Dies führt dazu, daß die fertige Schiebetüre 41 absinkt, also gegenüber der Stellung der Rohbau-Schiebetüre 41' eine tiefere Lage einnimmt. Um diese Absenkung im Bereich der Zentrierung 42 und des Karosserieflansches 48 zu ermöglichen weist die Abdeckung 54 eine Bodenfläche mit einer bestimmten Dicke auf. Die Bodenfläche der Abdeckung 54 liegt zwischen der Grundfläche 57 des Karosserieflansches 48 und der unteren Endfläche der Zentrierung 42. Die Dicke dieser Bodenfläche ist derart bemessen, daß die Absenkung der Schiebetüre in z-Richtung ermöglicht wird.

Anschließend wird die Drehscharnierachse 55 entfernt. Die Schiebetüre 41 kann durch den Schiebetür-Mechanismus von der B-Säule 2 entfernt werden. Jetzt kann die Abdeckkappe 47 von der Zentrierung 42 entfernt werden. Ferner kann die Abdeckkappe 56 montiert werden. Die Abdeckkappe 56 kann auf den Karossierflansch 48 aufsteckbar sein. Dabei können die Innenmaße der Abdeckkappe 56 geringfügig kleiner als die zugehörigen Außenmaße des Karossierflansches 48 sein, so daß die Abdeckkappe 56 reibschlüssig auf dem Karosserieflansch 48 festgehalten wird. Die Abdeckkappe 56 kann allerdings auch auf andere Weise mit dem Karosserieflansch 48 und/oder mit der B-Säule 2 verbunden werden. An der Abdeckkappe 56 ist die karosseriefeste Gegenfläche 47 vorgesehen.

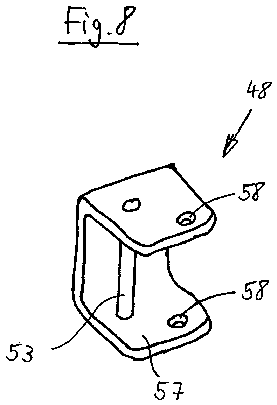

Fig. 8 zeigt den Karosserieflansch 40 in einer perspektivischen Darstellung. Er umfaß das Gegenlager 53 und Aufnahmen 58 für die Drehscharnierachse 55. Der Karosserieflansch 40 ist u-förmig ausgebildet. Seine Basis ist an der B-Säule 2 befestigt. Die Schenkel fassen die Zentrierung 42 ein.

Durch die Erfindung wird eine Montagehilfe geschaffen, die als Drehscharnier für die Ausrichtung der Rohbau-Schiebetüre in der Rohbaukarosserie des Fahrzeugs wirkt. Die Montagehilfe wirkt ferner sowohl als Lackierhilfe im Lackierprozeß als auch als spätere Zentrierung der Schiebetüre. Während der Montage mit den entsprechenden Funktionen für die Montageabfolge wirkt die Montagehilfe als Drehscharnier. Im fertigen Fahrzeug wirkt die Montagehilfe als Zentrierung für die Schiebetürfunktion.

## Patentansprüche

1. Schiebetüre für ein Fahrzeug mit einer Führungsschiene (5), mit einem Gleitschlitten (6), der an der Führungsschiene (5) längsverschieblich gelagert ist und der durch ein Mehrgelenk (7, 11, 6, 4) mit der Fahrzeugkarosserie verbunden ist, und mit einer Zentrierung (42) an ihrem dem Mehrgelenk (7, 11, 6, 4) abgewandten Ende, die eine Zentrierfläche (45) aufweist, die bei geschlossener Schiebetüre (41) an einer karosseriefesten Gegenfläche (47) anliegt,
**dadurch gekennzeichnet,**
**daß** die Zentrierfläche (45) einen ebenen Abschnitt (49) aufweist, der geneigt zur Fahrzeug-Längsrichtung verläuft, und einen Abschnitt (50), der parallel zur Fahrzeug-Längsrichtung verläuft,
und **daß** die karosseriefeste Gegenfläche (47) einen ebenen, geneigten Abschnitt (51) umfaßt und einen daran anschließenden parallelen Abschnitt (52),
wobei der geneigte Abschnitt (49) im geschlossenen Zustand der Schiebetüre an dem geneigten Abschnitt (51) anliegt und der parallele Abschnitt (50) an dem parallelen Abschnitt (52) anliegt.

2. Schiebetüre nach Anspruch 1, **dadurch gekennzeichnet, daß** die Zentrierung (42) einen Fanghaken (46) aufweist.

3. Schiebetüre nach einem der vorhergehenden Ansprüche, **dadurch gekennzeichnet, daß** die karosserieseitige Gegenfläche (47) an einer Abdeckung (56) vorgesehen ist.

4. Fahrzeug, insbesondere Kraftfahrzeug, **gekennzeichnet durch** eine oder mehrere Schiebetüren nach einem der Ansprüche 1 bis 3.

## Claims

1. A sliding door for a vehicle with a guide rail (5), with a sliding carriage (6) which is longitudinally shiftably mounted on the guide rail (5) and which is connected with the vehicle body by a multiple joint (7, 11, 6, 4), and with a centering means (42) at its end facing away from the multiple joint (7, 11, 6, 4), which includes a centering surface (45) which rests against a counter surface (47) integral with the body, when the sliding door (41) is closed,
**characterized in**
**that** the centering surface (45) includes a flat portion (49) which extends inclined with respect to the longitudinal direction of the vehicle, and a portion (50) which extends parallel to the longitudinal direction of the vehicle,
and **that** the counter surface (47) integral with the body comprises a flat, inclined portion (51) and an adjoining parallel portion (52),
wherein in the closed condition of the sliding door the inclined portion (49) rests against the inclined portion (51) and the parallel portion (50) rests against the parallel portion (52).

2. The sliding door according to claim 1, **characterized in that** the centering means (42) includes a catch hook (46).

3. The sliding door according to any of the preceding claims, **characterized in that** the body-side counter surface (47) is provided on a cover (56).

4. A vehicle, in particular a motor vehicle, **characterized by** one or more sliding doors according to any of claims 1 to 3.

## Revendications

1. Porte coulissante pour un véhicule avec un rail de guidage (5), avec un chariot glissant (6), qui est monté mobile en translation sur le rail de guidage (5) et qui est relié à la carrosserie de véhicule par une articulation multiple (7, 11, 6, 4), et avec un moyen de centrage (42) à son extrémité opposée à l'articulation multiple (7, 11, 6, 4), qui comprend une surface de centrage (45) qui repose contre une contre-surface (47) faisant partie intégrante de la carrosserie quand la porte coulissante (41) est fermée,
**caractérisée en ce que**
la surface de centrage (45) comprend une partie plate (49) qui s'étend de manière inclinée par rapport à la direction longitudinale du véhicule, et une partie (50) qui s'étend parallèlement à la direction longitudinale du véhicule,
et que la contre-surface (47) faisant partie intégrante de la carrosserie comporte une partie plate inclinée (51) et une partie parallèle adjacente (52), et
à l'état fermé de la porte coulissante, la partie inclinée (49) reposant contre la partie inclinée (51) et la partie parallèle (50) reposant contre la partie parallèle (52).

2. Porte coulissante selon la revendication 1, **caractérisée en ce que** le moyen de centrage (42) comprend un crochet d'arrêt (46).

3. Porte coulissante selon l'une quelconque des revendications précédentes, **caractérisée en ce que** la contre-surface (47) du côté de la carrosserie est prévue sur une couverture (56).

4. Véhicule, en particulier véhicule automobile, **caractérisé par** une ou plusieurs portes coulissantes selon l'une quelconque des revendications 1 à 3.
